Europäisches Patentamt

European Patent Office

Office européen des brevets

(19)

(11) Numéro de publication : **0 133 873**
**B1**

(12)

# FASCICULE DE BREVET EUROPÉEN

(45) Date de publication du fascicule du brevet :
11.11.87

(51) Int. Cl.⁴ : **G 02 B  6/44**

(21) Numéro de dépôt : **84106104.7**

(22) Date de dépôt : **29.05.84**

(54) **Câble sous-marin à fibres optiques et procédé de fabrication d'un tel câble.**

(30) Priorité : **03.06.83 FR 8309230**

(43) Date de publication de la demande :
**13.03.85 Bulletin 85/11**

(45) Mention de la délivrance du brevet :
**11.11.87 Bulletin 87/46**

(84) Etats contractants désignés :
**DE FR GB IT**

(56) Documents cités :
**EP-A- 0 060 180**
**EP-A- 0 079 073**
**GB-A- 2 052 092**
**PATENTS ABSTRACTS OF JAPAN, volume 6, no. 96,**
**974-P-120, 4 juin 1982**

(73) Titulaire : **LES CABLES DE LYON Société anonyme dite:**
**170 quai de Clichy**
**F-92111 Clichy Cedex (FR)**

(72) Inventeur : **Allemand, Didier**
**329, allée des Mouettes**
**F-62730 Marck (FR)**
Inventeur : **Degoix, Bernard**
**17, rue Lalande**
**F-62100 Calais (FR)**
Inventeur : **Dubar, Thierry**
**rue Edouard Manet Bâtiment 1 - Appt. 87**
**F-62100 Calais (FR)**

(74) Mandataire : **Weinmiller, Jürgen et al**
**Lennéstrasse 9 Postfach 24**
**D-8133 Feldafing (DE)**

Jouve, 18, rue St-Denis, 75001 Paris, France

## Description

La présente invention concerne un câble sous-marin à fibres optiques et un procédé de fabrication d'un tel câble.

L'invention s'applique en particulier à des câbles susceptibles de supporter des pressions de l'ordre de 600 à 700 bars.

On connaît, notamment par le document GB-A-2 052 092, un câble sous-marin à fibres optiques comportant un jonc central présentant sur sa périphérie des rainures hélicoïdales dans lesquelles sont déposées les fibres, l'espace laissé libre dans les rainures étant éventuellement rempli d'un composé visqueux, et des bouchons d'étanchéification étant en outre éventuellement disposés à intervalles réguliers dans ces rainures. Cette structure est généralement protégée par un ruban isolant et/ou une gaine isolante par exemple en polychlorure de vinyle (l'ensemble ainsi formé constituant le cœur optique du câble). Afin d'absorber les efforts de traction exercés sur le câble, on réalise autour du cœur optique du câble une voûte porteuse formée de fils d'acier enroulés en hélices à spires jointives, cette voûte étant à son tour protégée extérieurement par une gaine de cuivre extrudée ou formée à partir d'un ruban soudé longitudinalement.

Cet ensemble est encore entouré d'au moins une gaine isolante de protection.

En cas d'endommagement accidentel du câble entraînant une rupture locale de la gaine extérieure et même de la gaine de cuivre, il est très important que l'eau de mer sous forte pression ne puisse s'infiltrer dans la voûte du câble, et détériorer ce câble sur de grandes longueurs.

La présente invention a pour but d'assurer une étanchéification longitudinale du câble au niveau de sa voûte.

La présente invention a pour objet un câble sous-marin à fibres optiques comportant, successivement :

un cœur optique protégé par une gaine plastique en polychlorure de vinyle,

une voûte porteuse du cœur optique, formée de fils métalliques enroulés en hélices à spires jointives autour dudit cœur optique protégé de sa gaine plastique, le métal des fils étant choisi parmi l'acier et l'aluminium, et

une gaine métallique enserrant ladite voûte, le métal de cette gaine étant choisi parmi le cuivre et l'aluminium,

caractérisé par le fait que la face externe de ladite gaine plastique, lesdits fils métalliques formant voûte et la face interne de ladite gaine métallique sont liés par un produit de remplissage adhésif et thermodurci résultant de la polymérisation d'un mélange de résine époxyde et de copolymères de polybutadiène et de butadiène acrylonitrile, et d'un durcisseur, le produit de remplissage se trouvant disposé de façon à former le long de la voûte des bouchons d'étanchéification longitudinaux régulièrement espacés.

La proportion en poids des résines époxydes d'une part et des copolymères est comprise entre 1/5 et 1/1.

On a constaté que ce produit de remplissage permettait une étanchéification tout à fait satisfaisante entre la gaine en PVC, la voûte et la gaine métallique, malgré les caractéristiques essentiellement différentes de leurs matériaux constitutifs.

Dans tous les cas, le produit de remplissage selon l'invention permet au câble de conserver sa souplesse et de demeurer insensible aux flexions.

La présente invention a également pour objet un procédé de fabrication du câble tel que défini ci-dessus, selon lequel l'on injecte le produit de remplissage thermodurcissable dans la zone de commettage des fils métalliques de la voûte autour dudit cœur optique protégé par ladite gaine plastique, ladite injection étant réalisée de façon à former lesdits bouchons longitudinaux, et cette injection étant suivie par la mise en place de ladite gaine métallique autour de l'ensemble.

D'autres caractéristiques et avantages de la présente invention apparaîtront au cours de la description suivante faite à l'aide du dessin annexé donné à titre illustratif, mais nullement limitatif et dans lequel :

la figure 1 est une coupe transversale schématique d'un câble selon l'invention,

la figure 2 montre schématiquement en coupe longitudinale un dispositif permettant la mise en œuvre du procédé de l'invention.

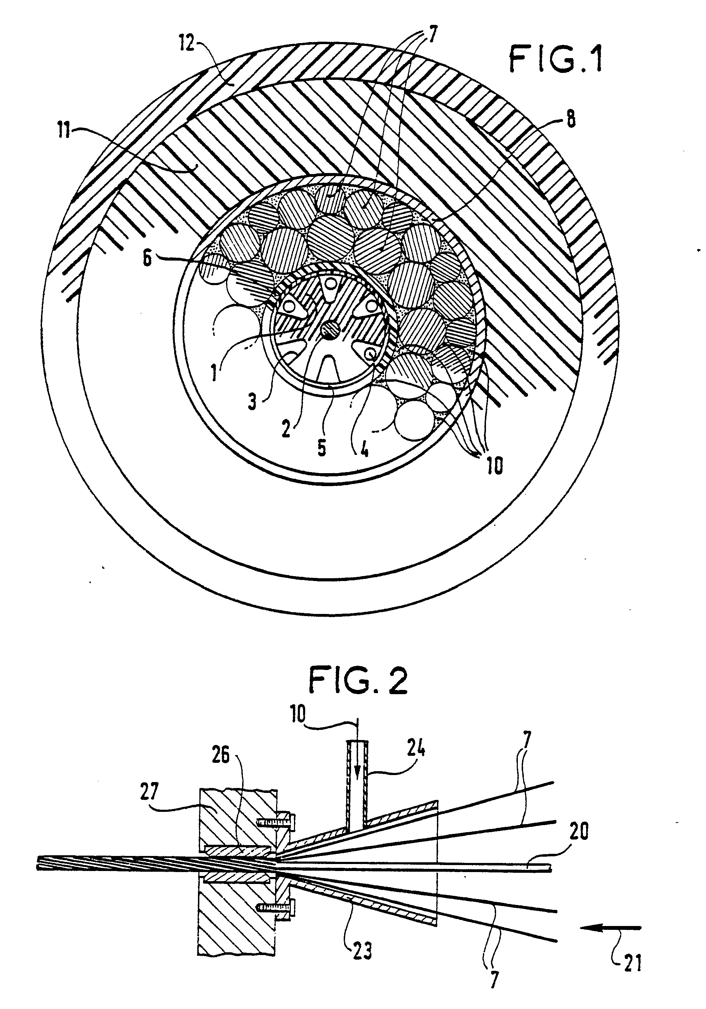

(Pour la clarté du dessin, la figure 1 n'a été que partiellement hachurée.)

On voit sur la figure 1, le cœur optique du câble formé par un jonc plastique 1 renforcé par un filin d'acier 2 et présentant six rainures périphériques hélicoïdales 3 ; chaque rainure contient une fibre optique 4 généralement noyée dans un produit visqueux. Un ruban plastique 5 entoure cet ensemble lui-même protégé par une gaine 6 en polychlorure de vinyle. Cette dernière peut présenter une épaisseur de l'ordre de quelques dixièmes de millimètre.

La voûte porteuse de ce cœur optique est formée de fils d'acier 7 enroulés en hélice pour constituer une armure, elle-même maintenue par une gaine de cuivre 8.

On a référencé respectivement 11 et 12 des gaines isolantes en polyéthylène.

Selon l'invention, on prévoit un produit de remplissage 10 adhérant à la fois aux fils 7 de la voûte, à la paroi interne de la gaine de cuivre 8 et à la paroi externe de la gaine de PVC 6, et comblant tous les interstices de la voûte.

Pour cela, un mélange de résine époxyde et de copolymères de polybutadiène et de butadiène en proportion 50 %, 50 % en poids est injecté dans la zone de commettage des fils métalliques de la voûte. Ce produit, qui a une durée de vie en pot de deux heures environ, ne coule pas avant polymérisation, et présente une durée de polymérisation de l'ordre de 7 jours à 20 °C, sans retrait, sans dégagement de produits volatils et corrosifs vis-à-vis des autres matériaux en présence.

Ce mélange contient un durcisseur tel qu'une amine.

De préférence, les fils d'acier de la voûte ont été initialement dégraissés et ont pu subir un traitement adéquat, par exemple de phosphatation.

On voit sur la figure 2 un dispositif de mise en œuvre du procédé selon l'invention ; on a référencé 20 le cœur optique du câble muni de sa gaine 6 en polychlorure de vinyle et animé d'un mouvement de translation schématisé par la flèche 21. Des fils d'acier 7 sont délivrés par des bobines et animés de mouvements permettant leur commettage. Dans la zone de commettage est installé un cône 23 muni d'une tubulure 24 pour l'introduction du produit de remplissage adhésif 10 selon l'invention.

Pendant leurs mouvements dans le cône 23, les fils 7 s'imprègnent de produit 10 qui ne coule pas, entrent en contact avec la gaine en PVC 6 du cœur optique 20, et sont introduits dans une filière de rétreint 26 solidarisée à un support 27.

Selon un mode de mise en œuvre, l'imprégnation des fils 7 est réalisée de façon telle que sont formés des bouchons ayant une longueur de quelques mètres et étant espacés les uns des autres de quelques centaines de mètres environ.

Dans d'autres cas, il peut être intéressant de réaliser des bouchons de quelques centimètres.

De préférence le cône 23 est en deux parties, ce qui facilite son démontage et son nettoyage.

Bien entendu l'invention n'est pas limitée au mode de réalisation qui vient d'être décrit et illustré. On pourra, sans sortir du cadre de l'invention remplacer tout moyen par un moyen équivalent. Ainsi, le cœur optique pourrait être constitué par des fibres optiques contenues dans des tubes plastiques remplis de matière visqueuse.

## Revendications

1. Câble sous-marin à fibres optiques comportant successivement :

un cœur optique (20) protégé par une gaine plastique (6) en polychlorure de vinyle,

une voûte porteuse du cœur optique, formée de fils métalliques (7) enroulés en hélices à spires jointives autour dudit cœur optique protégé de sa gaine plastique, le métal des fils étant choisi parmi l'acier et l'aluminium, et,

une gaine métallique (8) enserrant ladite voûte, le métal de cette gaine étant choisi parmi le cuivre et l'aluminium,

caractérisé par le fait que la face externe de ladite gaine plastique (6), lesdits fils métalliques (7) formant voûte et la face interne de ladite gaine métallique (8) sont liés par un produit de remplissage (10), adhésif et thermodurci, résultant de la polymérisation d'un mélange de résine époxyde et de copolymères de polybutadiène et de butadiène acrylonitrile, et d'un durcisseur, le produit de remplissage se trouvant disposé de façon à former le long de la voûte des bouchons d'étanchéification longitudinaux régulièrement espacés.

2. Câble selon la revendication 1, caractérisé par le fait que la proportion en poids des résines époxydes et des copolymères est comprise entre 1/5 et 1/1.

3. Câble selon l'une des revendications 1 ou 2, caractérisé par le fait que lesdits bouchons ont une longueur de quelques mètres et sont espacés les uns des autres de quelques centaines de mètres environ.

4. Procédé de fabrication d'un câble selon l'une des revendications précédentes, caractérisé par le fait que l'on injecte ledit produit de remplissage thermodurcissable (10) dans la zone de commettage des fils métalliques (7) de ladite voûte autour dudit cœur optique (20) protégé par ladite gaine plastique (6), ladite injection étant réalisée de façon à former lesdits bouchons longitudinaux, et cette injection étant suivie par la mise en place de ladite gaine métallique (8) autour de l'ensemble.

## Claims

1. A submarine optical fiber cable comprising successively :

an optical core (20) protected by a plastic sheath (6) of polyvinyl chloride,

an arch carrying the optical core, formed of metal wires (7) wound helically in contiguous turns around said optical core protected by its plastic sheath, the metal of the wires being chosen among steel and aluminium,

a metal sheath (8) emprisoning said arch, the metal of this sheath being chosen among copper and aluminium,

characterized in that the outer face of said plastic sheath (6), said metal wires (7) forming arch and the inner face of said metal sheath (8) are interconnected by an adhesive and thermo-hardened filling product (10) resulting from the polymerisation of a mixture of epoxy resin and polybutadiene and acrylonitrile butadiene copolymeres, and a hardener, the filling product being disposed so as to form longitudinal sealing plugs regularly spaced along the arch.

2. A cable according to claim 1, characterized in that the weight ratio of the epoxy resins and the copolymeres is comprised between 1/5 and 1/1.

3. A cable according to one of claims 1 or 2, characterized in that said plugs have a length of a few meters and are distanced from one another by approximately several hundred meters.

4. A method of manufacturing a cable according to one of the preceding claims, characterized in that said thermo-hardenable filling product (10) is injected into the stranding zone of the metal wires (7) of said arch around said optical core (20) protected by said plastic sheath (6), said injection being realised so as to form said longitudinal plugs, and this injection being followed by disposing of said metal sheath (8) around the unit.

**Patentansprüche**

1. Lichtleitseefaserkabel, das übereinander aufweist :

einen optischen Kern (20), der von einer Kunststoffhülle (6) aus Polyvinylchlorid geschützt wird,

einen den optischen Kern tragenden Mantel bestehend aus Metalldrähten (7), die in Spiralen mit sich berührenden Windungen um den von seiner Kunststoffhülle geschützten Kern herumgewickelt sind, wobei das Metall der Drähte aus Stahl und Aluminium ausgewählt wird,

eine Metallhülle (8), die den Mantel umschließt, wobei das Metall dieser Hülle aus Kupfer und Aluminium ausgewählt wird,

dadurch gekennzeichnet, daß die Außenseite der Kunststoffhülle (6), die den Schirm bildenden Metalldrähte (7) und die Innenseite der Metallhülle (8) durch ein klebendes und wärmegehärtetes Füllmaterial (10) verbunden sind, das aus der Polymerisation einer Mischung von Epoxyharz und Copolymeren von Polybutadien und Acrylonitrilbutadien und einem Härter entsteht, wobei das Füllmaterial so angeordnet ist, daß es entlang des Mantels in regelmäßigen Abständen angeordnete längliche Dichtstopfen bildet.

2. Kabel nach Anspruch 1, dadurch gekennzeichnet, daß das Gewichtsverhältnis der Epoxyharze und der Copolymere zwischen 1/5 und 1/1 liegt.

3. Kabel nach einem der Ansprüche 1 oder 2, dadurch gekennzeichnet, daß die Stopfen eine Länge von mehreren Metern haben und um einige hundert Meter voneinander entfernt sind.

4. Verfahren zur Herstellung eines Kabels nach einem der vorhergehenden Ansprüche, dadurch gekennzeichnet, daß das wärmehärtbare Füllmaterial (10) in dem Bereich injiziert wird, in dem die Metalldrähte (7) des Mantels um den von der Kunststoffhülle (6) geschützten optischen Kern (20) gewickelt werden, wobei die Injektion so durchgeführt wird, daß die Längsstopfen entstehen, und wobei nach dieser Injektion das Anbringen der Metallhülle (8) um die Einheit erfolgt.

FIG.1

FIG. 2